# EUROPEAN PATENT APPLICATION

(11) **EP 4 397 946 A1**
(43) Date of publication of application: **10.07.2024**
(21) Application number: 23219905.9
(22) Date of filing: 22.12.2023
(51) Int. Cl.: G01C 21/34, G01C 21/36

(54) **ROUTE INFORMATION PROCESSING METHOD AND APPARATUS, AND COMPUTER DEVICE**

(30) Priority: 05.01.2023 CN 202310012523
(71) Applicant: NIO Software Technology (Shanghai) Co., Ltd., Shanghai (CN)
(72) Inventor: Zeng, Ping, Shanghai (CN); Wen, Hongbo, Sanghai (CN); Zhao, Dongxu, Shanghai (CN); Xie, Yan, Shanghei (CN); Zhou, Kangquan, Shanghai (CN)
(74) Representative: Patentanwaltskanzlei Matschnig & Forsthuber OG

(57) **Abstract**

The disclosure relates to a route information processing method which comprises: receiving a route processing instruction, the route processing instruction carrying a navigation route to be processed on a regional map and position information of charging stations on the regional map; determining a dynamic search range corresponding to the navigation route to be processed based on tile grids pre-laid on the regional map and sparsities pre-assigned to the tile grids; and dynamically adjusting the navigation route to be processed based on the dynamic search range for the navigation route to be processed and the position information of the charging stations, to obtain an adjusted navigation route. According to the method, a search range can be automatically expanded for an electric vehicle in a region with insufficient power replenishment resources, and the search range can be automatically reduced in a region with sufficient power replenishment resources.

## Description

### TECHNICAL FIELD

The disclosure relates to the technical field of electric vehicles, and in particular, to a route information processing method and apparatus, a computer device, a storage medium, and a computer program product.

### BACKGROUND

Currently, the development and the popularization of electric vehicles are confronted with many challenges, the most serious of which is that a storage capacity of an onboard battery is limited and an electric vehicle needs to be charged several times when traveling a long distance. In a resource dense region, a large number of charging stations may be built, and when the electric vehicle is in low power, an owner of the electric vehicle can temporarily choose the nearest charging station to replenish power. However, in a case where the battery runs out and the electric vehicle cannot keep traveling when the electric vehicle travels a long distance or travels to a remote region, if the owner of the electric vehicle temporarily finds a charging station, there may be such a problem that power cannot be replenished to the electric vehicle in a timely manner because of scarce charging station resources.

In the related art, a vehicle navigation route provided by an electronic map provider generally considers only driving time and road condition information, and when a user drives the electric vehicle based on the navigation route, if the electric vehicle is in low power, the current route should be temporarily replanned to find a charging station. This not only costs a plenty of time, but also wastes a large number of resources on the way to find a charging station.

### SUMMARY

In view of this, it is necessary to provide a route information processing method and apparatus, a computer device, a storage medium, and a computer program product for the foregoing technical problems, in which a driving path considers positions of charging stations and an optimal planned power replenishment path can be provided.

In a first aspect, the disclosure provides a route information processing method, comprising:
receiving a route processing instruction, the route processing instruction carrying a navigation route to be processed on a regional map and position information of charging stations on the regional map;
determining a dynamic search range corresponding to the navigation route to be processed based on tile grids pre-laid on the regional map and sparsities pre-assigned to the tile grids; and
dynamically adjusting the navigation route to be processed based on the dynamic search range for the navigation route to be processed and the position information of the charging stations, to obtain an adjusted navigation route.

In one embodiment, determining the sparsities corresponding to the tile grids comprises:
determining a number of charging stations included in each tile grid based on the position information of the charging stations; and
determining a sparsity corresponding to each tile grid based on the number of charging stations included in each tile grid and at least two preset value ranges, the value ranges being in one-to-one correspondence with the sparsities.

In one embodiment, determining a dynamic search range corresponding to the navigation route to be processed based on tile grids pre-laid on the regional map and sparsities pre-assigned to the tile grids comprises:
dividing the navigation route to be processed based on a preset segment length value, to obtain route segments; and
determining a dynamic search range corresponding to each route segment based on a sparsity corresponding to a tile grid through which each route segment passes.

In one embodiment, at least two sparsities are in one-to-one correspondence with the at least two preset search ranges; and
determining a dynamic search range corresponding to each route segment based on a sparsity corresponding to a tile grid through which each route segment passes comprises:
determining, based on the sparsity corresponding to the tile grid through which each route segment passes, a corresponding matched search range from a correspondence between the sparsities and the search ranges as the dynamic search range corresponding to the route segment.

In one embodiment, determining the sparsity corresponding to the tile grid through which each route segment passes comprises:
when the route segment passes through at least two tile grids, obtaining a route length of the route segment in each tile grid through which the route segment passes; and
determining a tile grid in which the route length reaches a preset length value as a tile grid corresponding to the route segment, and determining a sparsity corresponding to the tile grid in which the route length reaches the preset length value as a sparsity corresponding to the route segment.

In one embodiment, dynamically adjusting the navigation route to be processed based on the dynamic search range for the navigation route to be processed and the position information of the charging stations, to obtain an adjusted navigation route comprises:
obtaining real-time available range information of a vehicle; and
dynamically adjusting the navigation route to be processed based on the real-time available range information, the dynamic search range corresponding to each route segment, and the position information of the charging stations, to obtain the adjusted navigation route.

In one embodiment, dynamically adjusting the navigation route to be processed based on the real-time available range information, the dynamic search range corresponding to each route segment, and the position information of the charging stations, to obtain the adjusted navigation route comprises:
determining an estimated charging segment in the navigation route to be processed based on the real-time available range information;
determining a dynamic search range corresponding to the estimated charging segment based on the dynamic search range corresponding to each route segment; and
determining, based on the position information of the charging stations, a charging station that satisfies a preset condition within the dynamic search range corresponding to the estimated charging segment as a waypoint, to obtain the adjusted navigation route.

In a second aspect, the disclosure further provides a route information processing apparatus, comprising:
a receiving module configured to receive a route processing instruction, the route processing instruction carrying a navigation route to be processed on a regional map and position information of charging stations on the regional map;
a determining module configured to determine a dynamic search range corresponding to the navigation route to be processed based on tile grids pre-laid on the regional map and sparsities pre-assigned to the tile grids; and
an adjustment module configured to dynamically adjust the navigation route to be processed based on the dynamic search range for the navigation route to be processed and the position information of the charging stations, to obtain an adjusted navigation route.

In a third aspect, the disclosure further provides a computer device. The computer device comprises a memory and a processor. A computer program is stored in the memory. The processor, when executing the computer program, implements the route information processing method according to any one of the foregoing embodiments.

In a fourth aspect, the disclosure further provides a computer-readable storage medium. A computer program is stored on the computer-readable storage medium. When the computer program is executed by a processor, the route information processing method according to any one of the foregoing embodiments is implemented.

In a fifth aspect, the disclosure further provides a computer program product. The computer program product comprises a computer program. When the computer program is executed by a processor, the route information processing method according to any one of the foregoing embodiments is implemented.

According to the route information processing method and apparatus, the computer device, the storage medium, and the computer program product, the concept of sparsity-based region division is introduced, and different charging station search ranges are set for regions with different power replenishment resources in an actual geographical region respectively. Therefore, a search range can be automatically expanded for an electric vehicle in a region with insufficient power replenishment resources, to increase a probability of finding a power replenishment resource; and the search range can be automatically reduced in a region with sufficient power replenishment resources, to avoid wasting computing resources due to excessive searches, reduce the amount of data processing, and accelerate the route adjustment.

### BRIEF DESCRIPTION OF DRAWINGS

FIG. 1 is a diagram of an application environment of a route information processing method according to an embodiment;
FIG. 2 is a schematic flowchart of a route information processing method according to an embodiment;
FIG. 3 is a schematic flowchart of a route information processing method according to an embodiment;
FIG. 4 is a schematic flowchart of a route information processing method according to an embodiment;
FIG. 5 is a schematic flowchart of a route information processing method according to an embodiment;
FIG. 6 is a block diagram of a structure of a route information processing apparatus according to an embodiment;
FIG. 7 is a block diagram of a structure of a determining module in a route information processing apparatus according to an embodiment;
FIG. 8 is a block diagram of a structure of an adjustment module in a route information processing apparatus according to an embodiment;
FIG. 9 is a block diagram of a structure of an adjustment unit in a route information processing apparatus according to an embodiment; and
FIG. 10 is a diagram of an internal structure of a computer device according to an embodiment.

### DESCRIPTION OF EMBODIMENTS

In order to make the objective, technical solutions, and advantages of the disclosure clearer, the disclosure is further described in detail below with reference to the accompanying drawings and the embodiments. It should be understood that the specific embodiments described herein are merely used to explain the disclosure and are not intended to limit the disclosure.

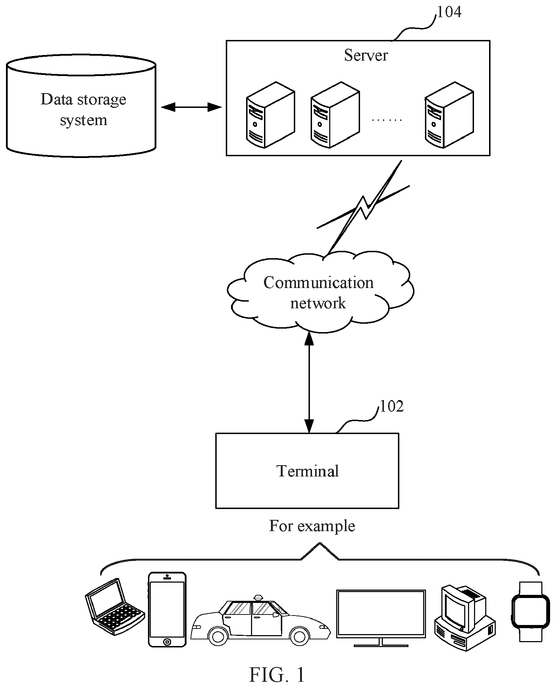

A route information processing method provided in the embodiments of the disclosure may be applied to an application environment shown in FIG. 1. A terminal 102 communicates with a server 104 through a network.

For example, the route information processing method is applied to the terminal 102. The terminal 102 receives a route processing instruction from a human-machine interaction interface. The route processing instruction carries a navigation route to be processed on a regional map and position information of charging stations on the regional map. The terminal 102 obtains, from the server 104, tile grids pre-laid on the regional map and sparsities pre-assigned to the tile grids, and further determines a dynamic search range corresponding to the navigation route to be processed. Then, the terminal 102 dynamically adjusts the navigation route to be processed based on the dynamic search range corresponding to the navigation route to be processed and the position information of the charging stations, to obtain an adjusted navigation route. The terminal 102 may include but is not limited to various personal computers, notebook computers, smart phones, tablet computers, Internet of things devices, and portable wearable devices. The Internet of things device may be a smart speaker, a smart television, a smart air conditioner, a smart onboard device, or the like. The portable wearable device may be a smart watch, a smart band, a head-mounted device, or the like. The server 104 may be implemented as an independent server or a server cluster composed of a plurality of servers. The terminal 102 and the server 104 may be directly or indirectly connected to each other in a wired or wireless communication manner, for example, connected through the network.

For another example, the route information processing method is applied to the server 104. After receiving a route processing instruction from a human-machine interaction interface, the terminal 102 sends the route processing instruction to the server 104. The route processing instruction carries a navigation route to be processed on a regional map and position information of charging stations on the regional map. The server 104 further determines a dynamic search range corresponding to the navigation route to be processed based on tile grids pre-laid on the regional map and sparsities pre-assigned to the tile grids. Then, the server 104 dynamically adjusts the navigation route to be processed based on the dynamic search range corresponding to the navigation route to be processed and the position information of the charging stations, to obtain an adjusted navigation route. It may be understood that a data storage system may be an independent storage device, or the data storage system is located on the server, or the data storage system is located on another terminal.

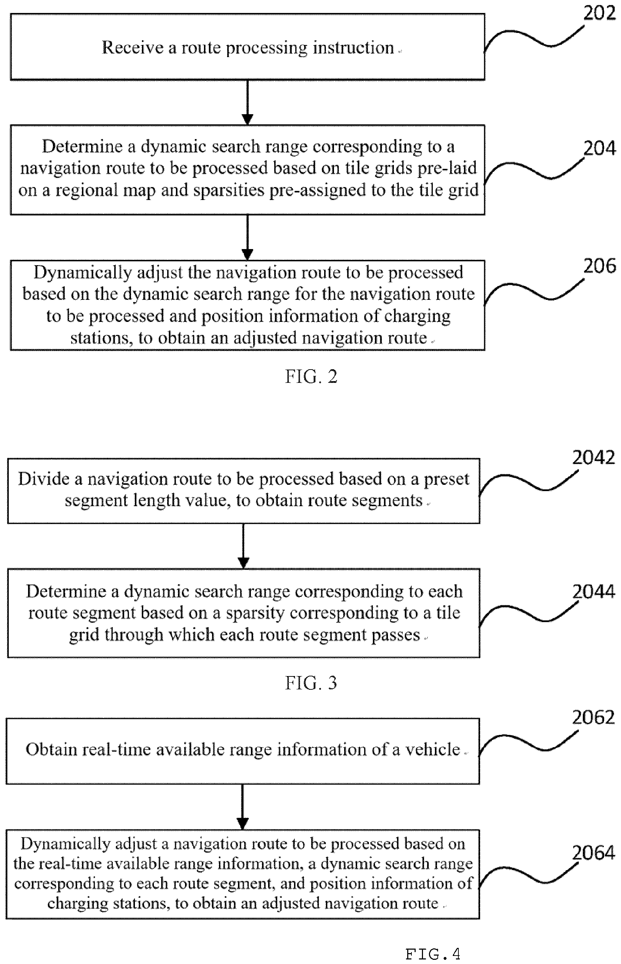

In an embodiment, a route information processing method is provided. In this embodiment, application of the route information processing method to a processor is taken as an example for description. It may be understood that the processor may be located on a terminal or a server. As shown in FIG. 2, the route information processing method comprises the following steps.

In step 202, a route processing instruction is received, the route processing instruction carrying a navigation route to be processed on a regional map and position information of charging stations on the regional map.

The route processing instruction may be sent out by a user through a human-machine interaction interface of the terminal, or may be automatically generated when the user chooses to generate an ordinary navigation route through the human-machine interaction interface of the terminal. The route processing instruction is an instruction of replanning a route using the charging station as a waypoint based on the ordinary navigation route.

The regional map may be a geographical image obtained by scaling an actual geographical region based on a preset scale.

The navigation route to be processed is a navigation route automatically generated by the processor after the user enters an origin and a destination on the terminal. In this case, the navigation route considers only driving time, road condition information, and other related information.

The position information of the charging stations on the regional map is position information of each charging station on the regional map obtained after a position of the charging station in the actual geographical region is converted into a position on the regional map based on longitude and latitude information of the actual geographical position corresponding to each charging station.

In this embodiment, after receiving the route processing instruction, the processor obtains, based on the route processing instruction, the navigation route to be processed generated based on the origin and the destination that are selected by the user during a travel, and obtains the position information of all the charging stations on the regional map.

In step 204, a dynamic search range corresponding to the navigation route to be processed is determined based on tile grids pre-laid on the regional map and sparsities pre-assigned to the tile grids.

The tile grids are grids laid on the regional map based on a preset distribution rule. The distribution rule includes the sizes of the tile grids and orientations and positions in which the tile grids are laid.

As an example, the tile grid may be a hexagonal honeycomb. The hexagonal honeycomb is a spatial index structure capable of covering all land regions. Compared with another graphics capable of full coverage, the hexagonal honeycomb has the advantages that the hexagonal honeycomb remains an area unchanged in different longitude and latitude regions and is closer to a circle, and the like.

The sparsity is the number of charging stations in a tile grid on the regional map.

The dynamic search range is a range of searching for a charging station near the navigation route to be processed with the navigation route to be processed as a center.

The tile grid is used to subdivide the regional map. A granularity of the tile grid is used to reflect a group that the actual geographical position of the charging station belongs to. For example, when the scale of the regional map is 10000 centimeters (cm): 1 cm, and the size of the tile grid is 10 cm × 10 cm, it may be learned that an area corresponding to the tile grid is 100 square centimeters (cm2), and it may be obtained through calculation based on the scale of the regional map that the size of an actual geographical region corresponding to one tile grid is 10⁶ square meters (m2). To be specific, it may be understood that a worker practically groups the charging stations based on geographical positions with the minimum geographical range 10⁶ m2 as a unit.

As an example, the processor divides the navigation route to be processed based on a tile grid through which the navigation route to be processed passes, and further determines a dynamic search range corresponding to the navigation route to be processed in each tile grid based on a sparsity corresponding to each tile grid.

In this embodiment, the processor extracts, from the server, the tile grids pre-laid on the regional map and the sparsities pre-assigned to the tile grids, and determines a search range of charging stations near the navigation route to be processed based on the sparsities corresponding to the tile grids.

In step 206, the navigation route to be processed is dynamically adjusted based on the dynamic search range for the navigation route to be processed and the position information of the charging stations, to obtain an adjusted navigation route.

The adjusted navigation route is a navigation route generated after the charging station is added to the navigation route to be processed as a waypoint.

As an example, the processor may start calculation with the navigation route to be processed as a starting point. When a route length reaches a preset charging distance value, search for a charging station is performed with a current position on the navigation route to be processed as a center and a dynamic search range corresponding to the current position on the navigation route to be processed as a radius, and a charging station closest to the current position on the navigation route to be processed is used as a waypoint. Based on this, the navigation route to be processed is dynamically adjusted in such a way that the waypoint is added for path planning, to obtain a new navigation route. In this way, adjustment of the navigation route is completed.

In this embodiment, the processor searches for the position of the charging station near the navigation route to be processed based on the dynamic search range for the navigation route to be processed, and uses the charging station nearest to the navigation route to be processed as the waypoint to adjust the navigation route.

In the route information processing method, the user can select the origin and the destination of the route through the human-machine interaction interface on the terminal. Then, the processor generates, based on the driving time and the road condition information, the navigation route to be processed that does not consider a power replenishment requirement. Then, the processor obtains the position information of the charging stations distributed on the regional map, calculates, based on the tile grids formed through pre-division on the regional map and the sparsity corresponding to each tile grid, search ranges of searching for charging station resources in actual geographical regions corresponding to different tile grids based on the navigation route to be processed, and then finds a charging station as a waypoint from different search ranges, thereby performing path adjustment based on the navigation route to be processed to obtain the adjusted navigation route. With such an arrangement, the concept of sparsity-based region division is introduced, and different charging station search ranges are set for regions with different power replenishment resources in an actual geographical region respectively. Therefore, a search range can be automatically expanded for an electric vehicle in a region with insufficient power replenishment resources, to increase a probability of finding a power replenishment resource; and the search range can be automatically reduced in a region with sufficient power replenishment resources, to avoid wasting computing resources due to excessive searches, reduce the amount of data processing, and accelerate the route adjustment.

In some optional embodiments, in the route information processing method, determining the sparsities corresponding to the tile grids comprises: determining a number of charging stations included in each tile grid based on the position information of the charging stations; and determining a sparsity corresponding to each tile grid based on the number of charging stations included in each tile grid and at least two preset value ranges, the value ranges being in one-to-one correspondence with the sparsities.

As an example, when the scale of the regional map is 10000 cm: 1 cm, and the size of the tile grid is 10 cm × 10 cm, the position information of the charging stations on the regional map may be understood as a marker. In this case, all markers included within the area 100 cm2 corresponding to the tile grid are charging stations included in the tile grid, and the charging stations included in the tile grid are all charging stations within a range of the actual geographical region of 10⁶ m2 corresponding to the tile grid.

As an example, the processor may preset a value threshold 3. It may be directly understood that the processor presets a value range of the number of charging stations between 0 and 3 and a value range of the number of charging stations greater than 3. When the number of charging stations included in a tile grid is within the value range between 0 and 3, the sparsity corresponding to the tile grid indicates that the current tile grid is a charging resource sparse region; or when the number of charging stations included in a tile grid is within the value range greater than 3, the sparsity corresponding to the tile grid indicates that the current tile grid is a charging resource dense region.

In this embodiment, the processor sets the at least two value ranges to hierarchically distinguish charging resources in different tile grids, and determines sparsities of the charging resources corresponding to the different tile grids.

As shown in FIG. 3, in some optional embodiments, step 204 comprises: a step 2042 of dividing the navigation route to be processed based on a preset segment length value, to obtain route segments; and a step 2044 of determining a dynamic search range corresponding to each route segment based on a sparsity corresponding to a tile grid through which each route segment passes.

As an example, the segment length value may be 5 km. When the scale of the regional map is 100000 cm: 1 cm, a route segment obtained by dividing the navigation route to be processed is 5 cm. When an actual geographical length of the navigation route to be processed is 100 km, the navigation route to be processed may be divided into 20 route segments in step 2042.

A specific setting of the segment length value may be adjusted based on a user requirement. A smaller segment length value indicates further subdivision of the search range. Generally speaking, the segment length value should not be less than a geographical length corresponding to one tile grid.

Further, based on the tile grid through which each route segment passes, a matched dynamic search range corresponding to the tile grid may be determined as the dynamic search region of the current route segment directly based on the sparsity corresponding to the tile grid.

In this embodiment, the processor divides the navigation route to be processed into a plurality of segments based on the preset segment length value, and determines the dynamic search range corresponding to each route segment. It may be learned that the dynamic search range corresponding to the navigation route to be processed is formed by combining different dynamic search ranges for a plurality of route segments, so that charging station search ranges corresponding to a charging resource sparse region and a charging resource dense region are distinguished.

In some optional embodiments, at least two sparsities are in one-to-one correspondence with the at least two preset search ranges. Step 2044 comprises: determining, based on the sparsity corresponding to the tile grid through which each route segment passes, a corresponding matched search range from a correspondence between the sparsities and the search ranges as the dynamic search range corresponding to the route segment.

As an example, when the processor presets the two value ranges to classify the tile grids into two sparsities, one sparsity indicates a charging resource sparse region, and the other sparsity indicates a charging resource dense region. The processor may further establish a mapping relationship between the two sparsities and two search ranges. The search range corresponding to the charging resource sparse region is 3 kilometers (km), and the search range corresponding to the charging resource dense region is 500 meters (m). Therefore, when a sparsity corresponding to a tile grid through which a route segment passes indicates that the current tile grid is a charging resource sparse region, the processor determines 3 km as a dynamic search range corresponding to the current route segment. When a sparsity corresponding to a tile grid through which a route segment passes indicates that the current tile grid is a charging resource dense region, the processor determines 500 m as a dynamic search range corresponding to the current route segment.

In some optional embodiments, in the route information processing method, determining the sparsity corresponding to the tile grid through which each route segment passes comprises: when the route segment passes through at least two tile grids, obtaining a route length of the route segment in each tile grid through which the route segment passes; and determining a tile grid in which the route length reaches a preset length value as a tile grid corresponding to the route segment, and determining a sparsity corresponding to the tile grid in which the route length reaches the preset length value as a sparsity corresponding to the route segment.

When a route segment passes through two or more tile grids, the processor may calculate a route length of the current route segment in each tile grid, determines a tile grid in which the route length reaches the preset length value as a tile grid corresponding to the current route segment, and determines a sparsity corresponding to the tile grid in which the route length reaches the preset length value as a sparsity corresponding to the route segment.

As an example, the processor may determine a tile grid in which the route length is largest as the tile grid corresponding to the current route segment.

As an example, when the scale of the regional map is 100000 cm: 1 cm, the size of the tile grid is 10 cm × 10 cm, and a length of the route segment is 5 km, the route segment on the regional map is 5 cm, and the preset length value preset by the processor is 3 cm. If a route segment spans two tile grids, of which the first tile grid includes 1 cm of the route segment, and the second tile grid includes 4 cm of the route segment, then the second tile grid may be determined as the tile grid corresponding to the current route segment.

As shown in FIG. 4, in some optional embodiments, step 206 comprises: a step 2062 of obtaining real-time available range information of a vehicle; and a step 2064 of dynamically adjusting the navigation route to be processed based on the real-time available range information, the dynamic search range corresponding to each route segment, and the position information of the charging stations, to obtain the adjusted navigation route.

The real-time available range information of the vehicle is real-time power, real-time available range mileage, full-charge available range mileage, or other information of the electric vehicle.

As an example, when the real-time available range information of the vehicle indicates that the current electric vehicle can travel only 50 kilometers, the processor may start calculation from the origin of the navigation route to be processed to determine a position of 50 kilometers from the origin of the navigation route to be processed as a charging position, determine a dynamic search range corresponding to the charging position based on a route segment where the charging position is located, and find a charging station within the dynamic search range as a waypoint to dynamically adjust the navigation route to be processed. It should be noted that a distance between the charging station within the dynamic search range corresponding to the charging position and the origin of the navigation route to be processed should not be more than 50 kilometers.

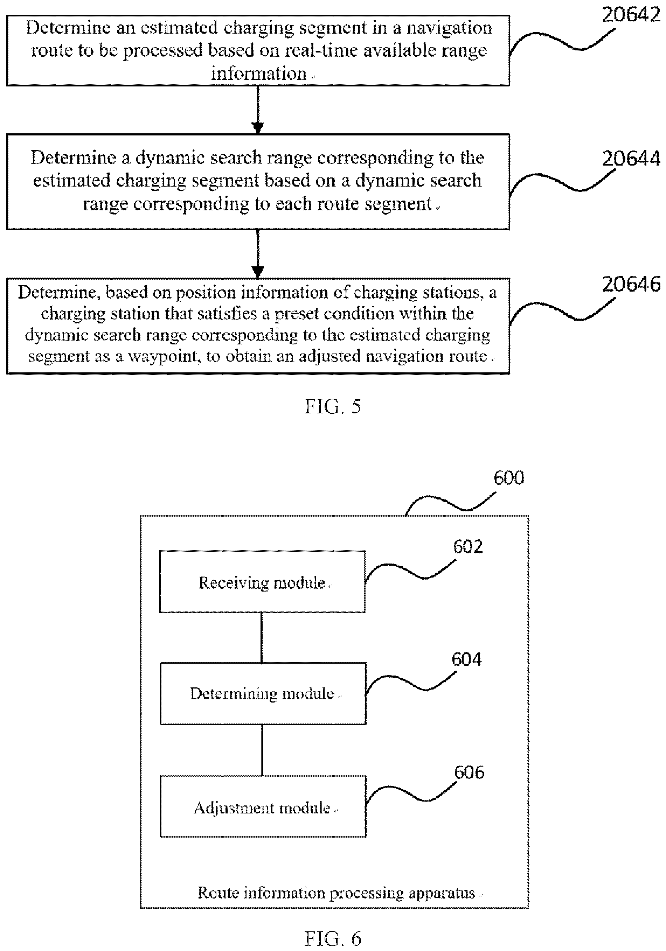

As shown in FIG. 5, in some optional embodiments, step 2064 comprises: a step 20642 of determining an estimated charging segment in the navigation route to be processed based on the real-time available range information; a step 20644 of determining a dynamic search range corresponding to the estimated charging segment based on the dynamic search range corresponding to each route segment; and a step 20646 of determining, based on the position information of the charging stations, a charging station that satisfies a preset condition within the dynamic search range corresponding to the estimated charging segment as a waypoint, to obtain the adjusted navigation route.

The estimated charging segment in the navigation route to be processed is a segment on which the electric vehicle is expected to need power replenishment. As an example, the processor determines a route, as the estimated charging segment, on which the electric vehicle is about to travel when the real-time available range mileage of the electric vehicle is within a range of 0 to 20 kilometers.

The preset condition may be, for example, that the charging station is closest to the origin of the navigation route to be processed within the dynamic search range corresponding to the estimated charging segment. With such a setting, the electric vehicle needs to travel a shortest distance in a process of finding a charging station.

As an example, where the length of the route segment is 10 km, the full-charge available range mileage of the electric vehicle is 200 kilometers, the real-time available range information indicates that the current electric vehicle can travel 50 kilometers, and a total length of the navigation route to be processed is 300 kilometers, the processor determines a segment of 30 to 50 kilometers from the origin of the navigation route to be processed and a segment of 230 to 250 kilometers from the origin of the navigation route to be processed as estimated charging segments. Further, dynamic search ranges corresponding to third to fifth route segments and 23th to 25th route segments are determined as dynamic search ranges corresponding to the estimated charging segments. All charging stations within the dynamic search ranges corresponding to the third to fifth route segments and the 23th to 25th route segments are determined as candidate charging stations. A charging station closest to the origin of the navigation route to be processed within the dynamic search range corresponding to the third route segment and a charging station closest to the origin of the navigation route to be processed within the dynamic search range corresponding to the 23th route segment are determined as waypoints. Then, the navigation route to be processed is adjusted to obtain an adjusted navigation route.

In the route information processing method, the processor divides the navigation route to be processed into a plurality of route segments, thereby subdividing the navigation route to be processed. Different dynamic search ranges corresponding to different positions on the navigation route to be processed are determined through the route segments and the tile grids with different sparsities. In addition, the charging station on the estimated charging segment is determined as the waypoint based on actual available range information of the vehicle, to adjust the navigation route. Therefore, the finally obtained adjusted navigation route is more in line with the actual situation of the current electric vehicle. According to the route information processing method, a problem of complexity in searching for a power replenishment resource in real time is solved. The charging segment for the electric vehicle is estimated in advance, and a charging station in a tile grid at an appropriate position is determined as a waypoint, so that a problem of real-time calculation and selection of an optimal resource being time-consuming is solved. In addition, search ranges corresponding to regions with different resource distributions are distinguished, so that the amount of data processing is reduced, and the route adjustment is accelerated.

It should be understood that although the steps in the flowcharts involved in the above embodiments are shown in sequence as indicated by the arrows, these steps are not necessarily executed in the order indicated by the arrows. Unless explicitly stated herein, there is no strict order restriction on the execution of these steps, and these steps can be executed in other orders. Moreover, at least some of the steps in the flowcharts involved in the above embodiments may comprise a plurality of steps or stages. These steps or stages are not necessarily executed at the same time, but may be executed at different times. The execution order of these steps or stages is not necessarily sequential, but they may be performed in turn or alternately with other steps or at least some of the steps or stages in other steps.

Based on the same inventive concept, an embodiment of the disclosure further provides a route information processing apparatus for implementing the route information processing method mentioned above. The solution provided by this apparatus to solve the problem is similar to that described in the above method. Therefore, for specific definitions in one or more route information processing apparatus embodiments provided below, reference may be made to the above definitions of the route information processing method, and details are not described herein again.

In an embodiment, as shown in FIG. 6, a route information processing apparatus 600 is provided, comprising: a receiving module 602, a determining module 604, and an adjustment module 606. The receiving module 602 is configured to receive a route processing instruction. The route processing instruction carries a navigation route to be processed on a regional map and position information of charging stations on the regional map. The determining module 604 is configured to determine a dynamic search range corresponding to the navigation route to be processed based on tile grids pre-laid on the regional map and sparsities pre-assigned to the tile grids. The adjustment module 606 is configured to dynamically adjust the navigation route to be processed based on the dynamic search range for the navigation route to be processed and the position information of the charging stations, to obtain an adjusted navigation route.

In some optional embodiments, that the route information processing apparatus 600 determines the sparsities corresponding to the tile grids comprises: determining a number of charging stations included in each tile grid based on the position information of the charging stations; and determining a sparsity corresponding to each tile grid based on the number of charging stations included in each tile grid and at least two preset value ranges, the value ranges being in one-to-one correspondence with the sparsities.

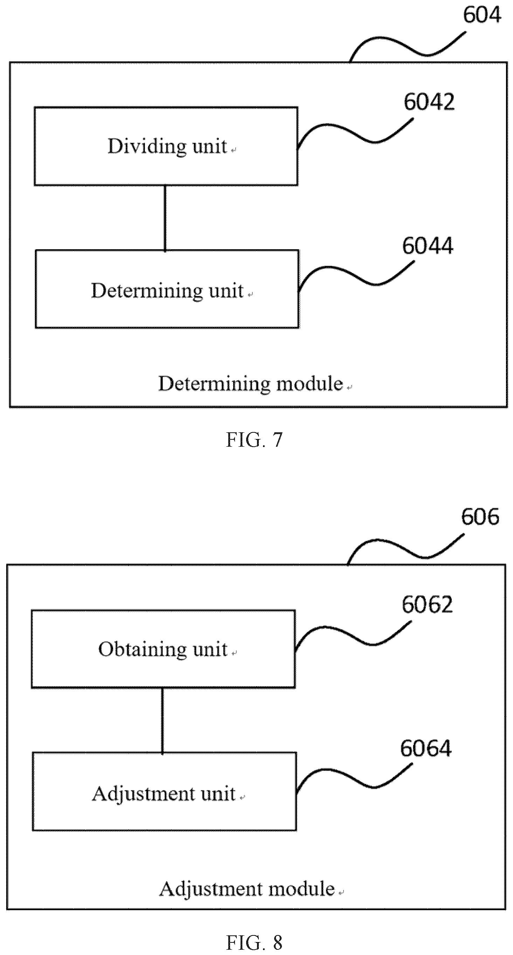

As shown in FIG. 7, in some optional embodiments, the determining module 604 comprises: a dividing unit 6042 configured to divide the navigation route to be processed based on a preset segment length value, to obtain route segments; and a determining unit 6044 configured to determine a dynamic search range corresponding to each route segment based on a sparsity corresponding to a tile grid through which each route segment passes.

In some optional embodiments, at least two sparsities are in one-to-one correspondence with the at least two preset search ranges. The determining unit 6044 is further configured to determine, based on the sparsity corresponding to the tile grid through which each route segment passes, a corresponding matched search range from a correspondence between the sparsities and the search ranges as the dynamic search range corresponding to the route segment.

In some optional embodiments, that the route information processing apparatus 600 determines the sparsity corresponding to the tile grid through which each route segment passes comprises: when the route segment passes through at least two tile grids, obtaining a route length of the route segment in each tile grid through which the route segment passes; and determining a tile grid in which the route length reaches a preset length value as a tile grid corresponding to the route segment, and determining a sparsity corresponding to the tile grid in which the route length reaches the preset length value as a sparsity corresponding to the route segment.

As shown in FIG. 8, in some optional embodiments, the adjustment module 606 comprises: an obtaining unit 6062 configured to obtain real-time available range information of a vehicle; and an adjustment unit 6064 configured to dynamically adjust the navigation route to be processed based on the real-time available range information, the dynamic search range corresponding to each route segment, and the position information of the charging stations, to obtain the adjusted navigation route.

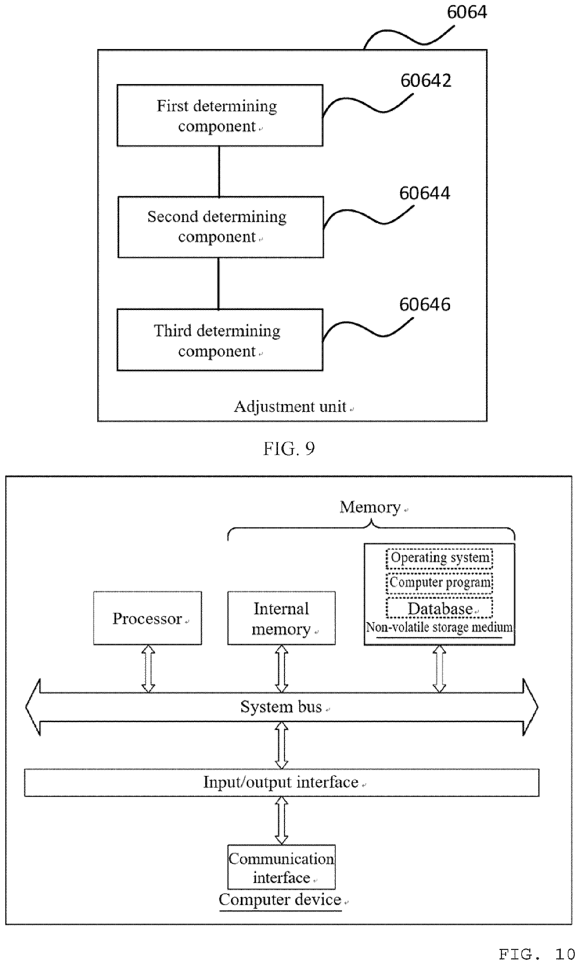

As shown in FIG. 9, in some optional embodiments, the adjustment unit 6064 comprises: a first determining component 60642 configured to determine an estimated charging segment in the navigation route to be processed based on the real-time available range information; a second determining component 60644 configured to determine a dynamic search range corresponding to the estimated charging segment based on the dynamic search range corresponding to each route segment; and a third determining component 60646 configured to determine, based on the position information of the charging stations, a charging station that satisfies a preset condition within the dynamic search range corresponding to the estimated charging segment as a waypoint, to obtain the adjusted navigation route.

All or some of the modules in the foregoing route information processing apparatus may be implemented by software, hardware and a combination thereof. Each of the modules described above may be embedded in or independent of a processor of a computer device in the form of hardware, or may be stored in a memory of the computer device in the form of software, so that the processor can call and execute the operations corresponding to the modules described above.

In one embodiment, a computer device is provided, which may be a terminal, and the diagram of its internal structure may be shown in FIG. 10. The computer device comprises a processor, a memory, an input/output interface, a communication interface, a display unit, and an input apparatus. The processor and the memory are connected to the input/output interface via a system bus, and the communication interface, the display unit and the input apparatus are connected to the system bus via the input/output interface. The processor of the computer device is configured to provide computing and control capabilities. The memory of the computer device comprises a non-volatile storage medium and an internal memory. The non-volatile storage medium stores an operating system and a computer program. The internal memory provides a running environment for the operating system and the computer program in the non-volatile storage medium. The input/output interface of the computer device is configured to exchange information between the processor and an external device. The communication interface of the computer device is configured for communication with an external terminal in a wired or wireless manner. The wireless manner may be implemented by WIFI, a mobile cellular network, near field communication (NFC), or another technology. When the computer program is executed by the processor, a route information processing method is implemented. The display unit of the computer device is configured to form a visible picture, and may be a display screen, a projection apparatus, or a virtual reality imaging apparatus. The display screen may be a liquid crystal display screen or an e-ink display screen. The input apparatus of the computer device may be a touch layer covering the display screen, may be a button, a trackball, or a touchpad disposed on a housing of the computer device, or may be an external keyboard, touchpad, mouse, or the like.

Those skilled in the art can understand that the structure shown in FIG. 10 is only a block diagram of a partial structure related to the solution of the disclosure, and does not constitute a limitation on the computer device to which the solution of the disclosure is applied. A specific computer device may comprise more or fewer components than shown, or have some components combined, or have a different arrangement of components.

In an embodiment, a computer-readable storage medium is provided, having a computer program stored thereon. When the computer program is executed by a processor, the following steps are implemented: receiving a route processing instruction, the route processing instruction carrying a navigation route to be processed on a regional map and position information of charging stations on the regional map; determining a dynamic search range corresponding to the navigation route to be processed based on tile grids pre-laid on the regional map and sparsities pre-assigned to the tile grids; and dynamically adjusting the navigation route to be processed based on the dynamic search range for the navigation route to be processed and the position information of the charging stations, to obtain an adjusted navigation route.

In some optional embodiments, when the computer program is executed by the processor, the following steps are further implemented: determining a number of charging stations included in each tile grid based on the position information of the charging stations; and determining a sparsity corresponding to each tile grid based on the number of charging stations included in each tile grid and at least two preset value ranges, the value ranges being in one-to-one correspondence with the sparsities.

In some optional embodiments, when the computer program is executed by the processor, the following steps are further implemented: dividing the navigation route to be processed based on a preset segment length value, to obtain route segments; and determining a dynamic search range corresponding to each route segment based on a sparsity corresponding to a tile grid through which each route segment passes.

In some optional embodiments, at least two sparsities are in one-to-one correspondence with the at least two preset search ranges. When the computer program is executed by the processor, the following step is further implemented: determining, based on the sparsity corresponding to the tile grid through which each route segment passes, a corresponding matched search range from a correspondence between the sparsities and the search ranges as the dynamic search range corresponding to the route segment.

In some optional embodiments, when the computer program is executed by the processor, the following steps are further implemented: when the route segment passes through at least two tile grids, obtaining a route length of the route segment in each tile grid through which the route segment passes; and determining a tile grid in which the route length reaches a preset length value as a tile grid corresponding to the route segment, and determining a sparsity corresponding to the tile grid in which the route length reaches the preset length value as a sparsity corresponding to the route segment.

In some optional embodiments, when the computer program is executed by the processor, the following steps are further implemented: obtaining real-time available range information of a vehicle; and dynamically adjusting the navigation route to be processed based on the real-time available range information, the dynamic search range corresponding to each route segment, and the position information of the charging stations, to obtain the adjusted navigation route.

In some optional embodiments, when the computer program is executed by the processor, the following steps are further implemented: determining an estimated charging segment in the navigation route to be processed based on the real-time available range information; determining a dynamic search range corresponding to the estimated charging segment based on the dynamic search range corresponding to each route segment; and determining, based on the position information of the charging stations, a charging station that satisfies a preset condition within the dynamic search range corresponding to the estimated charging segment as a waypoint, to obtain the adjusted navigation route.

In an embodiment, a computer program product is provided, comprising a computer program. When the computer program is executed by a processor, the following steps are implemented: receiving a route processing instruction, the route processing instruction carrying a navigation route to be processed on a regional map and position information of charging stations on the regional map; determining a dynamic search range corresponding to the navigation route to be processed based on tile grids pre-laid on the regional map and sparsities pre-assigned to the tile grids; and dynamically adjusting the navigation route to be processed based on the dynamic search range for the navigation route to be processed and the position information of the charging stations, to obtain an adjusted navigation route.

In some optional embodiments, when the computer program is executed by the processor, the following steps are further implemented: determining a number of charging stations included in each tile grid based on the position information of the charging stations; and determining a sparsity corresponding to each tile grid based on the number of charging stations included in each tile grid and at least two preset value ranges, the value ranges being in one-to-one correspondence with the sparsities.

In some optional embodiments, when the computer program is executed by the processor, the following steps are further implemented: dividing the navigation route to be processed based on a preset segment length value, to obtain route segments; and determining a dynamic search range corresponding to each route segment based on a sparsity corresponding to a tile grid through which each route segment passes.

In some optional embodiments, at least two sparsities are in one-to-one correspondence with the at least two preset search ranges. When the computer program is executed by the processor, the following step is further implemented: determining, based on the sparsity corresponding to the tile grid through which each route segment passes, a corresponding matched search range from a correspondence between the sparsities and the search ranges as the dynamic search range corresponding to the route segment.

In some optional embodiments, when the computer program is executed by the processor, the following steps are further implemented: when the route segment passes through at least two tile grids, obtaining a route length of the route segment in each tile grid through which the route segment passes; and determining a tile grid in which the route length reaches a preset length value as a tile grid corresponding to the route segment, and determining a sparsity corresponding to the tile grid in which the route length reaches the preset length value as a sparsity corresponding to the route segment.

In some optional embodiments, when the computer program is executed by the processor, the following steps are further implemented: obtaining real-time available range information of a vehicle; and dynamically adjusting the navigation route to be processed based on the real-time available range information, the dynamic search range corresponding to each route segment, and the position information of the charging stations, to obtain the adjusted navigation route.

In some optional embodiments, when the computer program is executed by the processor, the following steps are further implemented: determining an estimated charging segment in the navigation route to be processed based on the real-time available range information; determining a dynamic search range corresponding to the estimated charging segment based on the dynamic search range corresponding to each route segment; and determining, based on the position information of the charging stations, a charging station that satisfies a preset condition within the dynamic search range corresponding to the estimated charging segment as a waypoint, to obtain the adjusted navigation route.

Those of ordinary skill in the art can understand that all or some of the processes of the method in the embodiments described above may be implemented by a computer program instructing related hardware. The computer program may be stored in a non-volatile computer-readable storage medium. When the computer program is executed, the processes in each method embodiment may be performed. Any reference to the memory, the database or other media used in the embodiments provided in the disclosure may comprise at least one of non-volatile and volatile memories. The non-volatile memory may comprise a read-only memory (ROM), a magnetic tape, a floppy disk, a flash memory, an optical memory, a high-density embedded non-volatile memory, a resistive random access memory (ReRAM), a magnetoresistive random access memory (MRAM), a ferroelectric random access memory (FRAM), a phase change memory (PCM), a graphene memory, and the like. The volatile memory may comprise a random access memory (RAM), an external cache memory, and the like. As an illustration and not a limitation, RAM may be in various forms, such as a static random access memory (SRAM) or a dynamic random access memory (DRAM). The database involved in the various embodiments provided in the disclosure may comprise at least one of a relational database and a non-relational database. The non-relational database may comprise but is not limited to a blockchain-based distributed database, and the like. The processor involved in the various embodiments provided in the disclosure may be but is not limited to a general-purpose processor, a central processing unit, a graphics processor, a digital signal processor, a programmable logic device, a quantum computing-based data processing logic device, and the like.

The technical features of the above embodiments can be combined in any manner, and in order to simplify the description, not all possible combinations of the technical features of the above embodiments are described. However, as long as there is no conflict between the combinations of these technical features, they should be considered to be within the scope of the description in the disclosure.

The embodiments described above merely illustrate several implementations of the disclosure and are described relatively specifically and in detail, but should not be construed as limiting the patent scope of the disclosure. It should be noted that several variations and improvements may also be made by those of ordinary skill in the art without departing from the concept of the disclosure, and should fall within the scope of protection of the disclosure. Therefore, the scope of protection of the disclosure shall be subject to the appended claims.

## Claims

1. A route information processing method, comprising:
receiving a route processing instruction, the route processing instruction carrying a navigation route to be processed on a regional map and position information of charging stations on the regional map;
determining a dynamic search range corresponding to the navigation route to be processed based on tile grids pre-laid on the regional map and a plurality of sparsities pre-assigned to the tile grids; and
dynamically adjusting the navigation route to be processed based on the dynamic search range for the navigation route to be processed and the position information of the charging stations, to obtain an adjusted navigation route.

2. The method according to claim 1, wherein the method further comprising:
determining a number of charging stations included in each tile grid based on the position information of the charging stations; and
determining each of the plurality of sparsities corresponding to each tile grid based on the number of charging stations included in each tile grid and at least two preset value ranges, the value ranges being in one-to-one correspondence with the sparsities.

3. The method according to claim 2, wherein determining a dynamic search range corresponding to the navigation route to be processed based on tile grids pre-laid on the regional map and sparsities pre-assigned to the tile grids comprises:
dividing the navigation route to be processed based on a preset segment length value, to obtain route segments; and
determining a dynamic search range corresponding to each route segment based on a sparsity corresponding to a tile grid through which each route segment passes.

4. The method according to claim 3, wherein at least two sparsities are in one-to-one correspondence with the at least two preset search ranges; and
determining a dynamic search range corresponding to each route segment based on a sparsity corresponding to a tile grid through which each route segment passes comprises:
determining, based on the sparsity corresponding to the tile grid through which each route segment passes, a corresponding matched search range from a correspondence between the sparsities and the search ranges as the dynamic search range corresponding to the route segment.

5. The method according to claim 3, wherein determining the sparsity corresponding to the tile grid through which each route segment passes comprises:
when the route segment passes through at least two tile grids, obtaining a route length of the route segment in each tile grid through which the route segment passes; and
determining a tile grid in which the route length reaches a preset length value as a tile grid corresponding to the route segment, and determining a sparsity corresponding to the tile grid in which the route length reaches the preset length value as a sparsity corresponding to the route segment.

6. The method according to claim 3, wherein dynamically adjusting the navigation route to be processed based on the dynamic search range for the navigation route to be processed and the position information of the charging stations, to obtain an adjusted navigation route comprises:
obtaining real-time available range information of a vehicle; and
dynamically adjusting the navigation route to be processed based on the real-time available range information, the dynamic search range corresponding to each route segment, and the position information of the charging stations, to obtain the adjusted navigation route.

7. The method according to claim 6, wherein dynamically adjusting the navigation route to be processed based on the real-time available range information, the dynamic search range corresponding to each route segment, and the position information of the charging stations, to obtain the adjusted navigation route comprises:
determining an estimated charging segment in the navigation route to be processed based on the real-time available range information;
determining a dynamic search range corresponding to the estimated charging segment based on the dynamic search range corresponding to each route segment; and
determining, based on the position information of the charging stations, a charging station that satisfies a preset condition within the dynamic search range corresponding to the estimated charging segment as a waypoint, to obtain the adjusted navigation route.

8. A route information processing apparatus(600), comprising:
a receiving module(602) configured to receive a route processing instruction, the route processing instruction carrying a navigation route to be processed on a regional map and position information of charging stations on the regional map;
a determining module(604) configured to determine a dynamic search range corresponding to the navigation route to be processed based on tile grids pre-laid on the regional map and a plurality of sparsities pre-assigned to the tile grids; and
an adjustment module(606) configured to dynamically adjust the navigation route to be processed based on the dynamic search range for the navigation route to be processed and the position information of the charging stations, to obtain an adjusted navigation route.

9. A computer device, comprising a memory and a processor, a computer program being stored in the memory, wherein the processor, when executing the computer program, implements the steps of a route information processing method according to any one of claims 1 to 7.

10. A computer-readable storage medium having a computer program stored thereon, wherein when the computer program is executed by a processor, the steps of a route information processing method according to any one of claims 1 to 7 are implemented.

11. A computer program product, comprising a computer program, wherein when the computer program is executed by a processor, the steps of a route information processing method according to any one of claims 1 to 7 are implemented.
